# EUROPÄISCHE PATENTSCHRIFT

(11) **EP 1 199 957 B1**
(45) Veröffentlichungstag und Bekanntmachung des Hinweises auf die Patenterteilung: **06.10.2004**
(21) Anmeldenummer: 00953092.4
(22) Anmeldetag: 26.07.2000
(51) Int. Cl.: A46B 9/06

(54) **BÜRSTE, INSBESONDERE ZAHNBÜRSTE**
BRUSH, ESPECIALLY TOOTHBRUSH
BROSSE, EN PARTICULIER BROSSE A DENTS

(30) Priorität: 07.08.1999 DE 19937481
(43) Veröffentlichungstag der Anmeldung: 02.05.2002
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: PCT/EP2000/007159
(87) Internationale Veröffentlichungsnummer: WO 2001/010267

(56) Entgegenhaltungen:
- EP-A- 0 310 482
- WO-A-97/20484
- WO-A-98/27846
- DE-A- 3 628 722
- US-A- 1 770 195
- US-A- 5 325 560
- US-A- 5 373 602

## Beschreibung

Die Erfindung betrifft eine Bürste mit einem Borstenträger, bestehend aus wenigstens zwei im wesentlichen parallelen Schichten aus unterschiedlichen Kunststoffen, die im Zweikomponenten-Spritzgießverfahren hergestellt sind, und mit an wenigstens einer der Schichten befestigten Borsten.

Bürsten, die in einem Zweikomponenten-Spritzgießverfahren hergestellt sind, sind in vielen Ausführungsformen bekannt. Die Ausbildung des Borstenträgers aus zwei verschiedenen Kunststoffen hat mehrere Gründe. So kann es sich allein aus Kostengründen empfehlen, einen größeren Teil des Borstenträgers aus einem preiswerten Kunststoff, einen anderen Teil aus einem hochwertigeren und teureren Kunststoff zu fertigen, um allein dadurch zu einer Kostenersparnis zu kommen. Der hochwertigere Kunststoff kann dabei vornehmlich Festigkeitsfunktionen, aber auch besondere Gebrauchsfunktionen erfüllen. Ferner kann der die Borsten tragende Kunststoff in Abstimmung auf die Befestigungsart der Borsten ausgewählt werden, die in vorgeformte Löcher im Wege des Stanzens oder aber durch Einspritzen der befestigungsseitigen Enden in den Kunststoff des Borstenträgers, durch Aufschweißen auf den Borstenträger oder mit sonstigen thermoplastischen oder mechanischen Verfahren befestigt werden.

In fertigungstechnischer, wie auch gebrauchstechnischer Hinsicht stellen sich besondere Anforderungen bei kleinen Bürsten, wozu vornehmlich Zahnbürsten zählen. Es muß auf einer vergleichsweise kleinen Fläche eine große Anzahl von Borsten untergebracht werden, um die Reinigungswirkung an den Zähnen und gegebenenfalls eine hiermit kombinierte Massagewirkung des Zahnfleischs zu verwirklichen. Die große Anzahl von Borsten muß zudem auf einem Borstenträger mit kleinem Volumen untergebracht werden, weil der Borstenträger den sehr unterschiedlichen Platzverhältnissen im Mundraum einer größtmöglichen Anzahl von Benutzern Rechnung tragen muß. Dies erzwingt einen schmalen und flachen Bürstenkopf. Ferner müssen die Borsten eine hohe und für alle Borsten möglichst gleichbleibende Auszugsfestigkeit aufweisen, da gelöste Borsten nicht nur zu Unannehmlichkeiten im Mundraum durch Verklemmen in den Interdentalräumen führen, sondern auch zur Gesundheitsgefährdung werden können, wenn sie in die Speiseröhre und in den Verdauungstrakt gelangen.

Die Ausbildung des Bürstenkopf einer Zahnbürste aus zwei Komponenten ist beispielsweise vorgesehen (DE 36 28 722 A1), um den die notwendigen Festigkeitseigenschaften aufweisenden Teil des Bürstenkopfs, der aus einem Hartkunststoff besteht, mit einem weicheren gummielastischen Material, z.B. einem Elastomer, ganz oder teilweise zu umhüllen und dadurch die Verletzungsgefahr im Mundraum durch scharfe Kanten etc. zu mindern. Dabei ist insbesondere ein schichtweiser Aufbau bekannt, bei dem der harte Kunststoff des Bürstenkopfs an seinen Schmalseiten und an der Unterseite mit dem Elastomer belegt ist und die Borsten ausschließlich mit der Elastomerschicht durch Schweißen verbunden sind. Mit der Befestigung der Borsten in der Elastomerschicht erhalten die Borsten zudem eine Art elastischer Lagerung, die das elastische Auslenken der Borsten zur Seite hin begünstigen.

Bei einer anderen bekannten Ausführung (US 1 770 195) ist der mit dem Griff einstückige Bürstenkopf aus einem harten Material von einem gummiartigen Material vollständig umgeben, das an der Borstenseite mit napfförmigen Warzen versehen ist, in die die Borstenbündel eingesetzt sind, um auch in diesem Fall eine zusätzliche Federwirkung quer zur Bündelachse zu erhalten.

Ferner ist es bekannt (US 5 373 602), den Bürstenkopf zweiteilig auszubilden, wobei das mit dem Griffmaterial einstückige Teil kürzer ausgebildet ist und das Vorderende des Kopfs durch ein Teil aus einem Elastomer ergänzt wird, das zudem auf die Oberseite des harten Teils übergreift und dieses abdeckt. Hiermit soll insbesondere eine Abwinklung des vorderen Kopfteils gegenüber dem starren kurzen Kopfteil möglich sein. Bestehen der Griff und das hintere Kopfteil aus üblichen Hartkunststoffen, wie PS, PP etc., lassen sich diese beiden sehr unterschiedlichen Kunststoffe nicht oder nur mit großem Aufwand ausreichend fest miteinander verbinden. Herkömmliche Zweikomponenten-Spritzgießverfahren scheiden aus, weil die beiden Kunststoffe keine stoffschlüssige Verbindung eingehen.

Bei einer anderen Ausführungsform (EP 0 310 482) ist der aus einem mit dem Griff einstückigen, harten Kunststoff bestehende Bürstenkopf an den Schmalseiten und am Bürstenkopfende von einem Elastomer umgeben, während die Borsten ausschließlich auf der freibleibenden Fläche des harten Teils befestigt sind. Dadurch wird natürlich die Flächennutzung für den Borstenbesatz schlechter. Die Haftung des Elastomerteils wird gegenüber der vorgenannten Ausführung dadurch verbessert, daß dieses Teil den Bürstenkopf am vorderen Ende kappenartig übergreift, und durch eine ergänzende thermische Behandlung, zu der die EP 0 314 482 keine Einzelheiten angibt, fixiert wird.

Schließlich ist es bekannt (WO 97/20484), das mit dem Griff einstückige harte Teil des Bürstenkopfs in der Längsachse des Kopfs schmäler auszubilden und im Bereich des Vorderendes auf das Umrißmaß des Kopfs zu vergrößern. Der schmale Teil bildet den Träger für eine Art Skelettkonstruktion mit napfartigen Aufnahmen für die Borstenbündel, wobei diese Aufnahmen aus dem gleichen harten Kunststoff bestehen. Diese napfförmigen Aufnahmen werden unter Vervollständigung des Umrisses des Kopfs mit einem Elastomer umspritzt, das gegebenenfalls auch den gesamten harten Teil umgibt. Die Borsten sind teilweise im harten Mittelteil, teilweise in den napfförmigen Aufnahmen der elastomeren Randteile befestigt. Insbesondere letztere sollen dadurch flexibel ausweichen können. Bei dieser Ausführung ist zwar aufgrund der mehrfachen Durchdringung der harten und weichen Komponente von einer sicheren Verbindung beider Kunststoffe auszugehen, jedoch ist zum einen der Aufbau des Borstenkopfs außerordentlich verwickelt und sind infolgedessen aufwendige Spritzgießwerkzeuge erforderlich, zum anderen läßt sich die bei Zahnbürsten erwünschte Flexibilität des Bürstenkopfs nur in den Randbereichen erzielen und zudem nicht an den jeweiligen Bedarfsfall anpassen.

Eine Bürste gemäß den Oberbegriff des Anspruchs 1 ist aus WO 98/27846 bekannt.

Der Erfindung liegt die Aufgabe zugrunde, bei einer Bürste, deren Borstenträger aus verschiedenen Kunststoffen besteht, eine Ausbildung vorzuschlagen, die einerseits eine individuelle Anpassung der Flexibilität an den Bedarfsfall ermöglicht, andererseits eine sichere und dauerhafte Verbindung zwischen den beiden Kunststoffkomponenten gewährleistet.

Zur Lösung der Aufgabe geht die Erfindung aus von einer Bürste mit einem Borstenträger, bestehend aus wenigstens zwei im wesentlichen ebenen, prallelen Schichten aus unterschiedlichen Kunststoffen, die im Zweikomponenten-Spritzgießverfahren hergestellt sind, wobei die Borsten an wenigstens einer der Schichten befestigt sind (DE 36 28 722). In Weiterentwicklung dieser Bürste wird die Erfindungsaufgabe dadurch gelöst, daß wenigstens die den Borsten abgekehrte Schicht des Borstenträgers Durchbrechungen aufweist, die umfangsseitig geschlossen und mit dem Kunststoff der anderen Schicht gefüllt sind.

Die Erfindung macht sich zunächst den definierten und relativ einfachen Aufbau des Borstenträgers aus im wesentlichen parallelen Schichten zu Nutze, die für die wenigstens zwei Kunststoffe große Kontaktflächen und damit entsprechend große Haftflächen bieten. Bei einem solchen Schichtaufbau lassen sich ferner die gebrauchstechnischen Eigenschaft der Bürste auf den jeweiligen Bedarfsfall sehr genau anpassen, ohne daß zur Herstellung aufwendige Spritzgießwerkzeuge erforderlich sind. Insbesondere ist es möglich, die Flexibilität über die gesamte Länge des Bürstenkopfes oder aber auf Teilbereichen desselben den Bedürfnissen sehr genau anzupassen, und zwar durch die Auswahl der eingesetzten Kunststoffe, durch eine entsprechende Geometrie der Schichten, insbesondere der Schichtstärke im Hinblick auf das für die Biegefähigkeit maßgebliche Trägheitsmoment. Die umfangsseitig geschlossenen Durchbrechungen, die wenigstens in der der Borstenseite abgekehrten Schicht vorgesehen sind, werden bei dem Zweikomponenten-Spritzgießen mit dem Kunststoff der anderen Schicht gefüllt. Dadurch entsteht eine Vergrößerung der Haftfläche und zugleich eine Art Verzapfung beider Schichten, so daß auch Kunststoffe, die ansonsten schlecht zu fügen sind, ausreichend fest und sicher miteinander verbunden werden können. Ferner können die umfangsseitig geschlossenen Durchbrechungen, die zu einer Schwächung der sie aufweisenden Schicht führen, dazu herangezogen werden, die Flexibilität des Borstenträgers durch Form, Anordnung und Anzahl der Durchbrechungen auf den Bedarfsfall einzustellen.

Zwischen dem Rand der Durchbrechungen der einen Schicht und dem diese ausfüllenden Kunststoff der anderen Schicht kann eine kraftschlüssige Verbindung vorliegen, die dann besonders wirksam ist, wenn der Kunststoff der einen Schicht, der in die Durchbrechungen eindringt, beim Spritzgießen expandiert.

Die kraftschlüssige Verbindung kann ergänzt oder ersetzt werden durch eine stoffschlüssige Verbindung, sofern die Kunststoffe der wenigstens zwei Schichten ausreichend affin sind.

Beide vorgenannten Arten der Verbindung können ergänzt oder ersetzt werden durch eine formschlüssige Verbindung, indem die Durchbrechungen Hinterschnitte aufweisen.

Bei Bürsten mit einem flexiblen Borstenträger, der unter den bei Gebrauch der Bürste auf die Borsten wirkenden Kräfte nachgibt, läßt sich erfindungsgemäß die Flexibilität durch die Stärke der Schichten und die Auswahl der sie bildenden Kunststoffe einstellen.

Stattdessen oder zusätzlich kann die Flexibilität des Borstenträgers auch durch die Anzahl und/oder durch die Form oder die Größe der umfangsseitig geschlossenen Durchbrechungen in der einen Schicht einstellbar sein.

Hierbei empfehlen sich insbesondere schlitzartige Durchbrechungen, die quer zur Längsachse des Borstenträgers verlaufen und randseitig geschlossen sind. Bei einer solchen Ausbildung liegt im Bereich der Durchbrechung vornehmlich eine kraftschlüssige, gegebenenfalls auch formschlüssige Verbindung der beiden Kunststoffe vor.

Stattdessen können die Durchbrechungen in der einen Schicht auch eine Wandung aufweisen, die ausgehend von der Grenzflähche beider Schichten divergiert, so daß ein Hinterschnitt gebildet wird, der zu einer formschlüssigen Verbindung führt. Beim Spritzgießen kann der die Durchbrechungen ausfüllende Kunststoff der einen Schicht wahlweise von der einen oder anderen Seite aufgespritzt werden.

Die Erfindung gibt weiterhin die Möglichkeit, den Durchbrechungen in der den Borsten abgekehrten Schicht, die den Rücken des Borstenträgers bildet, einen Umriß zu verleihen, der in Verbindung mit verschiedenfarbigen Kunststoffen für beide Schichten ein Informationsmittel für den Benutzer bildet. Beispielsweise kann es sich um eine Farbanzeige für die Art der Borsten, z.B. deren Härte, um Buchstaben mit Informationshinweisen für den Benutzer, um Informationen nach Art von Ordnungsmitteln oder dergleichen handeln.

In bevorzugter Ausführung ist vorgesehen, daß wenigstens die die Borsten tragende Schicht aus einem Elastormer gebildet ist und diese Schicht die Borsten elastisch lagert. Die Borsten sind in diesem Fall vorzugsweise durch Schweißen oder Einspritzen in der Elastomerschicht verankert.

In vorteilhafter Ausgestaltung ist vorgesehen, daß die die Borsten tragende Elastomerschicht von einer Schicht aus einem weniger flexiblen Kunststoff abgedeckt ist, durch welchen die Borsten hindurchgeführt sind. Dabei kann es sich um eine relativ dünne Schicht handeln, die in Verbindung mit in die Elastomerschicht eingeschweißten oder eingespritzten Borsten die Auszugsfestigkeit zusätzlich erhöht.

Bei einem solchen dreischichtigen Aufbau können die Borsten wahlweise in nur einer der Schichten, oder auch in zwei benachbarten Schichten angeordnet sein. Ebenso kann nur ein Teil der Borsten in der einen Schicht, ein anderer Teil in beiden benachbarten Schichten befestigt sein.

Nachstehend ist die Erfindung anhand von in der Zeichnung wiedergegebenen Ausführungsbeispielen beschrieben. In der Zeichnung zeigen:
- Fig.1: einen Längsschnitt eines Zahnbürstenkopf in einer ersten Ausführung;
- Fig.2: eine Draufsicht auf den Zahnbürstenkopf gemäß Fig. 1;
- Fig.3: einen der Fig. 1 ähnlichen Schnitt einer anderen Ausführungsform;
- Fig.4: einen der Fig. 1 ähnlichen Schnitt einer weiteren Ausführungsform;
- Fig. 5a: einen Längsschnitt eines Zahnbürstenkopfs in drei schichtiger Ausführung;
- Fig. 5b: einen der Fig. 5a entsprechenden Schnitt einer abgewandelten Ausführung;
- Fig. 6: eine Seitenansicht eines Zahnbürstenkopfs in einer abgewandelten Ausführung und
- Fig. 7: einen der Fig. 1 entsprechenden Längsschnitt eines weiteren Ausführungsbeispiels.

Die in der Zeichnung nur ausschnittsweise wiedergegebene Zahnbürste weist einen Griff 1 und einen als Borstenträger 2 dienenden Kopf auf, an dem die Borsten 3 in Form von Bündeln 3a, Zonen oder einzelnstehend 3b angeordnet sind. Bei dem gezeigten Ausführungsbeispiel besteht der Borstenträger 2 aus zwei im wesentlichen parallelen Schichten 4 und 5, von denen die Schicht 4 aus einem vergleichsweise harten Kunststoff besteht, während die Schicht 5 beispielsweise aus einem gummielastischen Kunststoff, insbesondere aus einem Elastomer gebildet ist. In dieser weichen Schicht 5 sind die Borsten 3 befestigt, z. B. durch Schweißen, Einspritzen oder dergleichen.

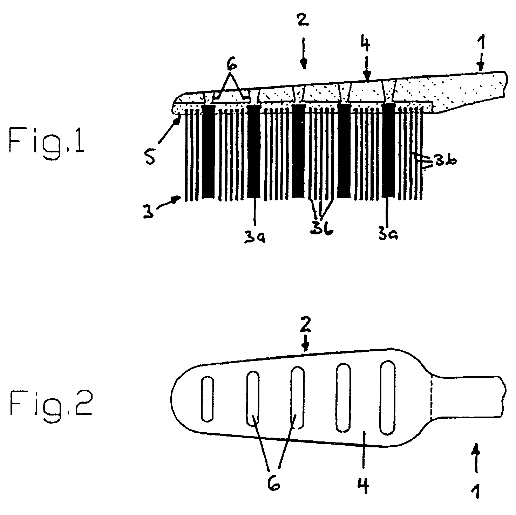

Die Schicht 4, die mit dem Griff 1 einstückig ist, und die Schicht 5 lassen sich in einem einzigen oder in zwei hintereinander geschalteten Spritzgießwerkzeugen im sogenannten Zweikomponenten-Spritzguß herstellen. Um die Haftfläche zwischen den beiden Schichten 4 und 5 zu vergrößern, weist der Borstenträger 2 Durchbrechungen 6 auf, die, wie Fig. 2 zeigt, umfangsseitig geschlossen, beispielsweise schlitzartig ausgebildet sind, und in die der Kunststoff der anderen Schicht 5 beim Spritzgießen eindringt. Die Durchbrechungen 6 können sich, wie in Fig. 1 gezeigt, nach außen konisch erweitern, so daß die Schicht 5 in der Schicht 4 fest verankert ist.

Durch die Formgebung, die Anzahl und die Anordnung der Durchbrechungen 6 läßt sich die Flexibilität des gesamten Bürstenkopfes aus der Schicht 4 und der Schicht 5 auf den jeweiligen Bedarfsfall einstellen.

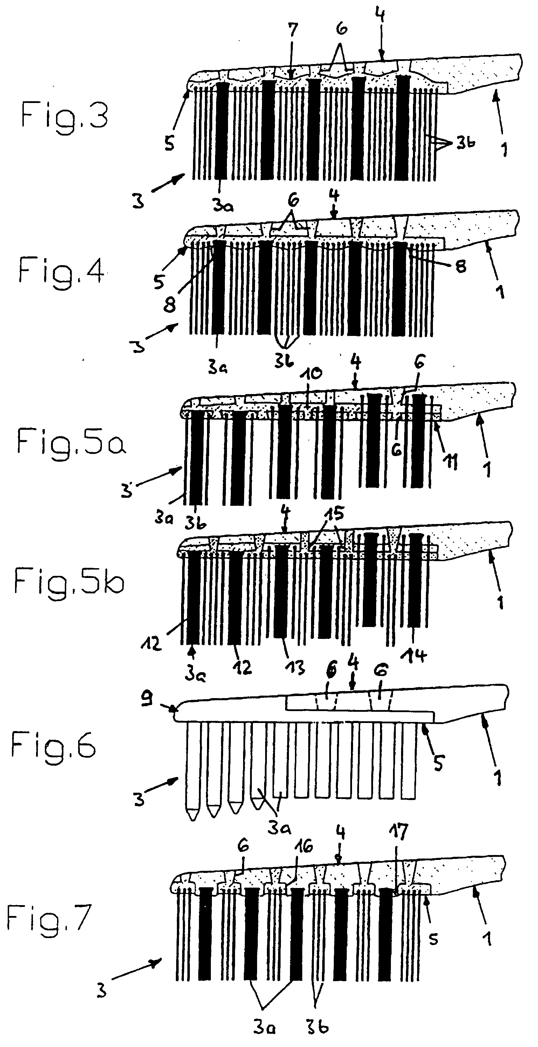

Das Ausführungsbeispiel gemäß Fig. 3 unterscheidet sich von dem der Fig. 1 nur dadurch, daß die Grenzfläche 7 zwischen den beiden Schichten 4, 5 gewellt oder genoppt ist, wobei aber beide Schichten immer noch im wesentlichen parallel angeordnet sind. Im Bereich der Scheitel der wellenförmigen Grenzfläche 7 befinden sich die Durchbrechungen 6, in die der Kunststoff der Schicht 5 beim Spritzgießen eindringt.

Im Bereich dieser Scheitel können auch die Borsten 3 oder Borstenbündel eingebettet sein, um eine größtmögliche Einbettungstiefe zu gewährleisten. In Verbindung mit dem die Durchbrechungen ausfüllenden Kunststoff ergibt sich eine besonders hohe Auszugsfestigkeit.

Das Ausführungsbeispiel gemäß Fig. 4 weicht von dem der Fig. 1 dadurch ab, daß die die Borsten 3 aufnehmende Schicht 5 eine gewellte Oberfläche aufweist. Die zu Bündeln 3a zusammengefaßten Borsten 3 sind im Bereich der Täler des Wellenprofils oder der lokalen Vertiefungen 8 in Flucht der Durchbrechungen befestigt, um bei vergleichsweise dünnen Schichten 4 und 5 eine ausreichende Auszugsfestigkeit zu erzielen. Im Bereich der Wellenscheitel bzw. in den dickeren Bereichen der Schicht 5 sind Einzelborsten 3b befestigt.

Bei dem Ausführungsbeispiel der Fig. 5 a und b ist der Borstenträger 2 aus drei Schichten ausgebildet, nämlich aus der Schicht 4, die wiederum mit dem Griff 1 einstückig ist und aus einem härteren Kunststoff bestehen kann, einer mittleren Schicht 10 und einer unteren Schicht 11, die gegebenenfalls aus dem gleichen Kunststoff wie die Schicht 4 bestehen kann, während die mittlere Schicht 10 beispielsweise aus einem Elastomer gebildet ist. Die Borsten 3 können entweder nur in der unten liegenden Schicht 11 befestigt sein, wie dies anhand der Bündel 12 angedeutet ist oder bis in die mittlere Schicht 10 reichen, wie dies mit den Bündeln 13 angedeutet ist. Schließlich ist es auch möglich, die Borsten 3 - wie bei den Bündeln 14 - bis in die oben liegende Schicht 4 einzusetzen.

Bei der Ausführungsform nach Fig. 5a weisen die obere Schicht 4 und die untere Schicht 11 sich jeweils nach außen erweiternde Durchbrechungen 6 auf, in die der Kunststoff der mittleren Schicht 10 eindringt, während bei dem Ausführungsbeispiel nach Fig. 5b die mittlere Schicht nur Durchbrüche 15 aufweist, durch die der Kunststoff der unteren Schicht 11 hindurch in die Durchbrechungen 6 der oberen Schicht 4 eindringt. Die Einzelborsten 3b können Lückenfüllend in einer oder mehreren Schichten verankert sein.

Bei dem Ausführungsbeispiel gemäß Fig. 6 besteht der Borstenträger 2 aus der Schicht 4, die mit dem Griff einstükkig ist, jedoch nur über einen Teil der Länge des Borstenträgers 2 reicht, und der Schicht 5, welche die Schicht 4 untergreift und zugleich den vorderen Bereich 9 des Borstenträgers 2 bildet. Die Schicht 4 weist wiederum die Durchbrechungen 6 auf, in die der Kunststoff aus dem übergreifenden Teil der Schicht 5 eindringt. Die Borsten 3 sind ausschließlich in der Schicht 5 in dem die Schicht 4 übergreifenden Teil und in dem das vordere Ende bildenden Teil 9 befestigt.

Bei dem Ausführungsbeispiel gemäß Fig. 7 besteht der Borstenträger 2 wiederum aus den Schichten 4 und 5, wobei in diesem Fall die Schicht 5 Durchbrechungen 16 aufweist, in die der Kunststoff der Schicht 4 eindringt bzw. diese Durchbrechungen durchgreift. In die dadurch gebildeten zapfenförmigen Vorsprünge 17 sind die Borsten 3 eingesetzt, z. B eingestanzt, eingespritzt oder in anderer Weise befestigt. Beim gezeigten Ausführungsbeispiel ist auch die Schicht 4 mit Durchbrechungen 6 versehen, in die der Kunststoff der Schicht 5 eindringt.

## Patentansprüche

1. Bürste mit einem Borstenträger, bestehend aus wenigstens zwei im wesentlichen parallelen Schichten aus unterschiedlichen Kunststoffen, die im Zweikomponenten-Spritzgießverfahren hergestellt sind, und mit an wenigstens einer der Schichten befestigten Borsten, wobei wenigstens die den Borsten (3) abgekehrte Schicht (4) des Borstenträgers (2) Durchbrechungen (6) aufweist, **dadurch gekennzeichnet, daß** die Durchbrechungen umfangsseitig geschlossen und mit dem Kunststoff der anderen Schicht (5) gefüllt sind.

2. Bürste nach Anspruch 1, **dadurch gekennzeichnet, daß** zwischen der Wandung der Durchbrechungen (6) der einen Schicht (4) und dem diese ausfüllenden Kunststoff der anderen Schicht (5) Kraftschluß besteht.

3. Bürste nach Anspruch 1 oder 2, **dadurch gekennzeichnet, daß** zwischen der Wandung der Durchbrechungen (6) der einen Schicht (4) und dem diese ausfüllenden Kunststoff der anderen Schicht (5) Formschluß besteht.

4. Bürste nach einem der Ansprüche 1 bis 3, **dadurch gekennzeichnet, daß** zwischen der Wandung der Durchbrechungen (6) der einen Schicht (4) und dem diese ausfüllenden Kunststoff der anderen Schicht (5) Stoffschluß besteht.

5. Bürste nach einem der Ansprüche 1 bis 4, **dadurch gekennzeichnet, daß** der Borstenträger (2) unter dem bei Gebrauch der Bürste auf die Borsten (3) wirkenden Kräfte flexibel nachgibt.

6. Bürste nach einem der Ansprüche 1 bis 5, **dadurch gekennzeichnet, daß** die Flexibilität des Borstenträgers (2) durch die Stärke der Schichten (4, 5) und die Auswahl der sie bildenden Kunststoffe einstellbar ist.

7. Bürste nach einem der Ansprüche 1 bis 6, **dadurch gekennzeichnet, daß** die Flexibilität des Borstenträgers (2) durch die Anzahl der umfangsseitig geschlossenen Durchbrechungen (6) in der einen Schicht (4) einstellbar ist.

8. Bürste nach einem der Ansprüche 1 bis 7, **dadurch gekennzeichnet, daß** die Flexibilität des Borstenträgers (2) durch die Größe der umfangsseitig geschlossenen Durchbrechungen (6) in der einen Schicht (4) einstellbar ist.

9. Bürste nach einem der Ansprüche 1 bis 8, **dadurch gekennzeichnet, daß** die Flexibilität des Borstenträgers (2) durch die Form der umfangsseitig geschlossenen Durchbrechungen (6) in der einen Schicht (4) einstellbar ist.

10. Bürste nach einem der Ansprüche 1 bis 9, **dadurch gekennzeichnet, daß** die Durchbrechungen (6) eine zylindrische Wandung aufweisen.

11. Bürste nch einem der Ansprüche 1 bis 9, **dadurch gekennzeichnet, daß** die Durchbrechungen (6) in der einen Schicht (4) eine Wandung aufweisen, die ausgehend von der anderen Schicht (5) nach außen divergiert.

12. Bürste nach einem der Ansprüche 1 bis 9, **dadurch gekennzeichnet, daß** die Durchbrechungen (6) in der den Borsten (3) abgekehrten Schicht (4) einen Umriß aufweisen, der in Verbindung mit verschiedenfarbigen Kunststoffen der beiden Schichten (4, 5) ein Informationsmittel für den Benutzer bildet.

13. Bürste nach einem der Ansprüche 1 bis 12, **dadurch gekennzeichnet, daß** wenigstens die die Borsten (3) tragende Schicht (5) aus einem Elastomer gebildet ist und diese Schicht die Borsten (3) elastisch lagert.

14. Bürste nach Anspruch 13, **dadurch gekennzeichnet, daß** die die Borsten (3) tragende Elastomerschicht (5) von einer Schicht (11) aus einem weniger flexiblen Kunststoff abgedeckt ist, durch die die Börsten (3) hindurchgeführt sind.

15. Bürste nach einem der Ansprüche 1 bis 14, **dadurch gekennzeichnet, daß** bei einem Aufbau des Borstenträgers aus drei Schichten (4, 5, 11) die Borsten (3) in einer der äußeren Schichten (4, 11) und/oder in der mittleren Schicht (10) befestigt sind.

16. Bürste nach einem der Ansprüche 1 bis 15, **dadurch gekennzeichnet, daß** die eine (4) von wenigstens zwei Schichten (4, 5) in Längserstreckung des Bürstenträgers (2) kürzer ist und die andere Schicht (5) die erste Schicht (4) über die volle Längserstreckung ergänzt.

## Claims

1. Brush with a bristle carrier comprising at least two substantially parallel layers of different plastics produced in the two-component injection moulding process and with bristles fastened to at least one of the layers, in which at least the layer (4) of the bristle carrier (2) remote from the bristles (3) has openings (6), **characterized in that** the openings are circumferentially closed and filled with the plastic of the other layer (5).

2. Brush according to claim 1, **characterized in that** a non-positive connection exists between the wall of the openings (6) of one layer (4) and the plastic of the other layer (5) filling the same.

3. Brush according to claim 1 or 2, **characterized in that** a positive connection exists between the wall of the opening (6) of one layer (4) and the plastic of the other layer (5) filling the same.

4. Brush according to one of the claims 1 to 3, **characterized in that** an integral connection exists between the wall of the opening (6) of one layer (4) and the plastic of the other layer (5) filling the same.

5. Brush according to one of the claims 1 to 4, **characterized in that** the bristle carrier (2) flexibly gives way under forces acting on the bristles (3) when the brush is in use.

6. Brush according to one of the claims 1 to 5, **characterized in that** the flexibility of the bristle carrier (2) is adjustable through the thickness of the layers (4, 5) and the choice of the plastics forming the same.

7. Brush according to one of the claims 1 to 6, **characterized in that** the flexibility of the bristle carrier (2) is adjustable through the number of circumferentially closed openings (6) in one layer (4).

8. Brush according to one of the claims 1 to 7, **characterized in that** the flexibility of the bristle carrier (2) is adjustable through the size of the circumferentially closed openings (6) in one layer (4).

9. Brush according to one of the claims 1 to 8, **characterized in that** the flexibility of the bristle carrier (2) is adjustable through the shape of the circumferentially closed openings (6) in one layer (4).

10. Brush according to one of the claims 1 to 9, **characterized in that** the openings (6) have a cylindrical wall.

11. Brush according to one of the claims 1 to 9, **characterized in that** the openings (6) in one layer (4) have a wall, which diverges outwards from the other layer (5).

12. Brush according to one of the claims 1 to 9, **characterized in that** the openings (6) in the layer (4) remote from the bristles (3) have a contour, which in conjunction with the differently coloured plastics of the two layers (4, 5) forms an information medium for the user.

13. Brush according to one of the claims 1 to 12, **characterized in that** at least the layer (5) carrying the bristles (3) is formed from an elastomer and said layer elastically supports the bristles (3).

14. Brush according to claim 13, **characterized in that** the elastomer layer (5) carrying the bristles (3) is covered by a layer (11) of less flexible plastic through which pass the bristles (3).

15. Brush according to one of the claims 1 to 14, **characterized in that** when the bristle carrier is constructed from three layers (4, 5, 11), the bristles (3) are fastened in one of the outer layers (4, 11) and/or in the central layer (10).

16. Brush according to one of the claims 1 to 15, **characterized in that** one (4) of at least two layers (4, 5) is shorter in the longitudinal extension of the bristle carrier (2) and the other layer (5) supplements the first layer (4) over the entire length extension.

## Revendications

1. Brosse comprenant un support de poils composé d'au moins deux couches sensiblement parallèles de matières synthétiques différentes, réalisées selon le procédé de moulage par injection à deux composants, et de poils fixés au moins sur l'une des couches, dans laquelle au moins la couche (4) opposée aux poils (3) du support de poils (2) présente des ouvertures traversantes (6), **caractérisée en ce que** les ouvertures traversantes sont fermées sur leur périmètre et remplies de la matière synthétique de l'autre couche (5).

2. Brosse selon la revendication 1, **caractérisée en ce qu'**il existe un ajustement serré entre la paroi des ouvertures traversantes (6) de l'une des couches (4) et la matière synthétique remplissant celles-ci de l'autre couche (5).

3. Brosse selon la revendication 1 ou 2, **caractérisée en ce qu'**il existe un ajustement de forme entre la paroi des ouvertures traversantes (6) de l'une des couches (4) et la matière synthétique remplissant celles-ci de l'autre couche (5).

4. Brosse selon l'une quelconque des revendications 1 à 3, **caractérisée en ce qu'**il existe un ajustement de matière entre la paroi des ouvertures traversantes (6) de l'une des couches (4) et la matière synthétique remplissant celles-ci de l'autre couche (5).

5. Brosse selon l'une quelconque des revendications 1 à 4, **caractérisée en ce que** le support de poils (2) fléchit sous l'effet de forces de flexion agissant sur les poils (3) lors de l'utilisation de la brosse.

6. Brosse selon l'une quelconque des revendications 1 à 5, **caractérisée en ce que** la flexibilité du support de poils (2) est réglable par l'épaisseur des couches (4,5) et le choix des matières synthétiques qui les composent.

7. Brosse selon l'une quelconque des revendications 1 à 6, **caractérisée en ce que** la flexibilité du support de poils (2) est réglable par le nombre d'ouvertures traversantes (6) à périmètre fermé dans l'une des couches (4).

8. Brosse selon l'une quelconque des revendications 1 à 7, **caractérisée en ce que** la flexibilité du support de poils (2) est réglable par la dimension des ouvertures traversantes (6) à périmètre fermé dans l'une des couches (4).

9. Brosse selon l'une quelconque des revendications 1 à 8, **caractérisée en ce que** la flexibilité du support de poils (2) est réglable par la forme des ouvertures traversantes (6) à périmètre fermé dans l'une des couches (4).

10. Brosse selon l'une quelconque des revendications 1 à 9, **caractérisée en ce que** les ouvertures traversantes (6) présentent une paroi cylindrique.

11. Brosse selon l'une quelconque des revendications 1 à 19, **caractérisée en ce que** les ouvertures traversantes (6) dans l'une des couches (4) présentent une paroi qui diverge vers l'extérieur à partir de l'autre couche (5).

12. Brosse selon l'une quelconque des revendications 1 à 9, **caractérisée en ce que** les ouvertures traversantes (6) présentent dans la couche (4) opposée aux poils (3) un profil de périphérie qui, en liaison avec des matières synthétiques de couleurs différentes des deux couches (4,5), constitue un moyen d'information pour l'utilisateur.

13. Brosse selon l'une quelconque des revendications 1 à 12, **caractérisée en ce qu'**au moins la couche (5) portant les poils (3) est constituée d'un élastomère et en ce dans que cette couche les poils (3) sont logés de manière élastique.

14. Brosse selon la revendication 13, **caractérisée en ce que** la couche élastomère (5) portant les poils (3) est recouverte d'une couche (11) d'une matière synthétique moins flexible, à travers laquelle les poils (3) sont guidés.

15. Brosse selon l'une quelconque des revendications 1 à 14, **caractérisée en ce que** pour une réalisation du support de poils à trois couches (4, 5, 11), les poils (3) sont fixés dans l'une des couches extérieures (4, 11) et/ou dans la couche médiane (10).

16. Brosse selon l'une quelconque des revendications 1 à 15, **caractérisée en ce que** l'une (4) au moins des deux couches (4, 5) est plus courte dans le sens longitudinal du support de poils (2) et **en ce que** l'autre couche (5) complète la première couche (4) sur la totalité de l'extension longitudinale.
